# FASCICULE DE BREVET EUROPEEN

(11) **EP 2 990 680 B1**
(45) Date de publication et mention de la délivrance du brevet: **23.08.2017**
(21) Numéro de dépôt: 15175490.0
(22) Date de dépôt: 06.07.2015
(51) Int. Cl.: F16D 21/06, F16D 25/0638, F16D 48/02

(54) **DISPOSITIF D EMBRAYAGE POUR UN VÉHICULE AUTOMOBILE**
KUPPLUNGSVORRICHTUNG FÜR KRAFTFAHRZEUG
CLUTCH DEVICE FOR A MOTOR VEHICLE

(30) Priorité: 01.08.2014 FR 1457502
(43) Date de publication de la demande: 02.03.2016
(73) Titulaire: Valeo Embrayages, 80009 Amiens Cedex 2 (FR)
(72) Inventeur: CAUMARTIN, Laurent, 80600 Beauquesne (FR); ARHAB, Rabah, 95350 St Brice Sous Forêt (FR); RIBOT, Herve, 80200 Peronne (FR)
(74) Mandataire: Cardon, Nicolas

(56) Documents cités:
- WO-A1-2009/021582
- DE-T2- 60 214 995
- US-A1- 2010 025 180
- US-A1- 2010 140 038

## Description

La présente invention concerne un dispositif d'embrayage pour un véhicule automobile.

La demande US 2010/0140038 A1 divulgue un dispositif d'embrayage pour véhicule automobile tel que définit dans l'introduction de la revendication 1. La demande de brevet WO 2009/105388 divulgue un dispositif d'embrayage pour un véhicule automobile, comprenant des moyens d'entrée de couple destinés à être couplés à un vilebrequin, un premier arbre de sortie de couple, un second arbre de sortie de couple, un premier mécanisme d'embrayage humide apte à coupler ou découpler les moyens d'entrée de couple et le premier arbre de sortie de couple, et un second mécanisme d'embrayage humide apte à coupler ou découpler les moyens d'entrée de couple et le second arbre de sortie de couple.

Les premier et second mécanismes d'embrayage sont logés dans un volume interne du dispositif et comportent respectivement des premiers et des seconds disques montés sur un même support externe appartenant aux moyens d'entrée de couple. Les premiers et seconds mécanismes d'embrayage comportent en outre respectivement des premiers et des seconds contre-disques montés respectivement sur un premier et un second supports internes couplés en rotation respectivement au premier et au second arbres de sortie de couple.

Les premiers et seconds mécanismes d'embrayage comportent en outre respectivement un premier piston et un second piston, chaque piston étant déplaçable entre une position d'embrayage dans laquelle ledit piston plaque les disques sur les contre-disques associés du mécanisme d'embrayage correspondant, et une position de débrayage dans laquelle ledit piston libère les disques et les contre-disques du mécanisme d'embrayage correspondant.

Le premier piston est associé à une première chambre de pression et à une première chambre de contre-pression, situées de part et d'autre du premier piston. Un canal de fuite relie la première chambre de contre-pression et le volume interne logeant les mécanismes d'embrayage, ledit canal comportant un orifice traversant le support externe.

Un tel canal de fuite permet de réduire la différence de pression entre la chambre de pression et la chambre de contre-pression, en particulier lorsque le fluide contenu dans lesdites chambres soumis à l'effet de la force centrifuge et lorsque la chambre de contre-pression et la chambre de pression ont des géométries et des dimensions radiales différentes.

Le support externe est destiné à transmettre du couple issu des moyens d'entrée de couple vers les disques du premier ou du second embrayages humides. La présence de l'orifice du canal de fuite dans le support externe dégrade donc les caractéristiques mécaniques dudit support externe. Compte tenu de l'encombrement limité disponible pour loger le support externe, il est relativement difficile d'augmenter l'épaisseur de ce support externe. Par conséquent, un tel dispositif d'embrayage ne peut être pas être utilisé pour transmettre des couples importants.

L'invention a notamment pour but d'apporter une solution simple, efficace et économique à ce problème.

A cet effet, elle propose un dispositif d'embrayage pour un véhicule automobile, comprenant des moyens d'entrée de couple destinés à être couplés à un vilebrequin, un premier arbre de sortie de couple, un second arbre de sortie de couple, un premier mécanisme d'embrayage humide apte à coupler ou découpler les moyens d'entrée de couple et le premier arbre de sortie de couple, un second mécanisme d'embrayage humide apte à coupler ou découpler les moyens d'entrée de couple et le second arbre de sortie de couple, les premier et second mécanismes d'embrayage étant logés dans un volume interne du dispositif et comportant respectivement des premiers et des seconds disques montés respectivement sur un premier et un second supports externes appartenant aux moyens d'entrée de couple, les premiers et seconds mécanismes d'embrayage comportant en outre respectivement des premiers et des seconds contre-disques montés respectivement sur un premier et un second supports internes couplés en rotation respectivement au premier et au second arbres de sortie de couple, les premiers et seconds mécanismes d'embrayage comportant respectivement un premier piston et un second piston, chaque piston étant déplaçable entre une position d'embrayage dans laquelle ledit piston plaque les disques sur les contre-disques associés du mécanisme d'embrayage correspondant, et une position de débrayage dans laquelle ledit piston libère les disques et les contre-disques du mécanisme d'embrayage correspondant, le premier piston étant associé à une première chambre de pression et à une première chambre de contre-pression, situées de part et d'autre du premier piston, un canal de fuite reliant la première chambre de contre-pression ou la première chambre de pression, d'une part, et le volume interne logeant les mécanismes d'embrayage, le canal de fuite étant dépourvu d'orifice traversant le premier support externe ou le second support externe.

Le dispositif selon l'invention comporte deux supports externes, aucun de ces deux supports ne comportant d'orifice appartenant au canal de fuite. Chaque support externe peut donc servir à transmettre un couple important.

Le dispositif selon l'invention comporte un premier organe d'appui délimitant au moins partiellement la première chambre de contre-pression, un organe de rappel élastique étant monté entre l'organe d'appui et le premier piston, ledit organe de rappel élastique étant conçu pour rappeler le premier piston vers sa position débrayée, le canal de fuite s'étendant, au moins partiellement, entre l'organe d'appui et le second support externe, la totalité du canal de fuite étant située d'un même côté du second support externe.

Le premier organe d'appui peut comporter des moyens d'entretoisement permettant d'écarter le premier organe d'appui du second support externe.

Dans ce cas, les moyens d'entretoisement peuvent comprendre des éléments en saillie, tels par exemple que des pattes ou des bossages, venant de matière avec le premier organe d'appui. Les moyens d'entretoisement pourraient aussi être des encoches.

Le premier organe d'appui est flottant axialement et radialement par rapport au support externe de façon à autoriser un debit d'huile entre le premier organe d'appui et le support externe.

Ce debit d'huile a deux fonctions. La première est d'assurer l'équilibre des pressions dynamiques pour que la pression différentielle entre les deux faces cotes du support externe soit constante quelque soit la vitesse de rotation. La deuxième est d'assurer le refroidissement de l'embrayage extérieur.

Le premier organe d'appui et le support externe sont pré-centrés par l'intermédiaire d'encoches ou des bossages formés sur le premier organe d'appui.

De plus, les premiers disques et les premiers contre-disques peuvent être situés radialement à l'extérieur des seconds disques et des seconds contre-disques, le second support externe comportant une partie de séparation s'étendant radialement au moins depuis l'extrémité radialement externe du canal de fuite jusqu'à une zone située radialement à l'extérieur des seconds disques et des seconds contre-disques, le canal de fuite débouchant d'un côté de la partie de séparation du second support externe tandis que les seconds disques et les seconds contre-disques sont situés de l'autre côté de la partie de séparation du second support externe.

En outre, le second piston peut être associé à une seconde chambre de pression et à une seconde chambre de contre-pression, situées de part et d'autre du second piston, le dispositif comportant en outre un moyeu d'alimentation comportant un premier circuit de fluide apte à être relié fluidiquement à la première chambre de pression ou à la seconde chambre de pression et un second circuit de fluide apte à être reliée fluidiquement à la première chambre de contre-pression ou à la seconde chambre de contre-pression.

Dans ce cas, le premier support externe et le second support externe peuvent être couplés en rotation au moyeu d'alimentation.

Par ailleurs, les moyens d'entrée de couple peuvent comporter un organe d'entrée de couple, couplé en rotation au premier support externe et délimitant avec celui-ci le volume interne dans lequel sont logés les premiers et seconds mécanismes d'embrayage.

Les deux arbres de sortie de couple peuvent être coaxiaux, le premier arbre de sortie de couple étant monté radialement à l'intérieur du second arbre de sortie de couple, le moyeu d'alimentation entourant le second arbre de sortie de couple.

L'invention concerne également un véhicule automobile comportant au moins un dispositif du type précité.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une demi-vue en coupe d'un dispositif d'embrayage selon une première forme de réalisation de l'invention,
- la figure 2 est une vue de détail de la figure 1 illustrant le canal de fuite.

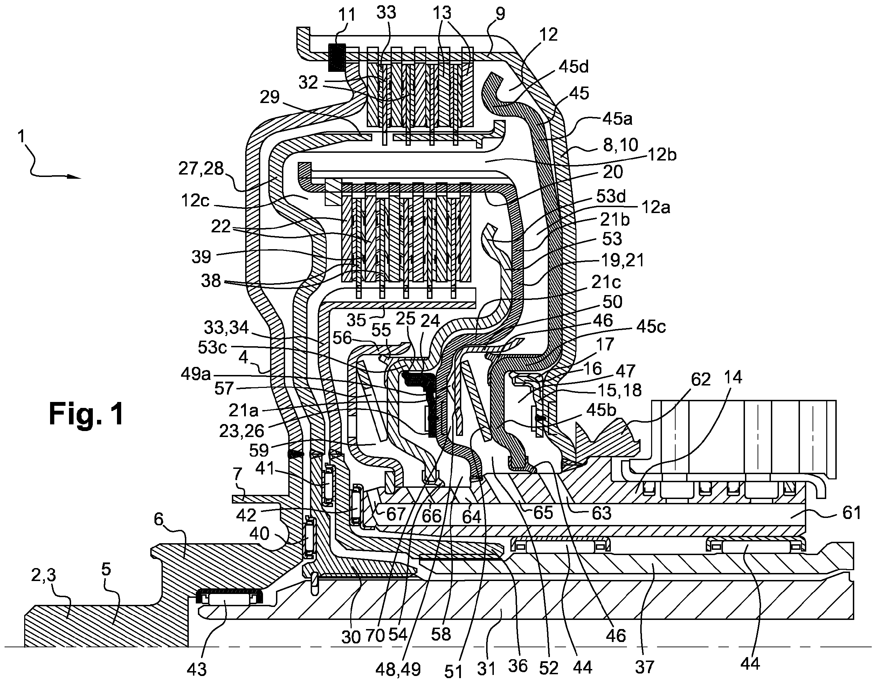

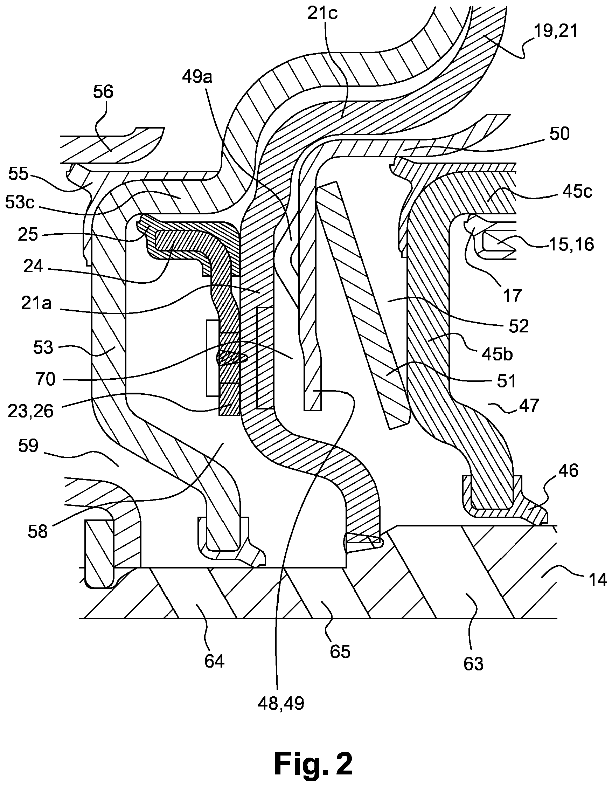

Un dispositif d'embrayage 1 selon une forme de réalisation de l'invention est illustré aux figures 1 et 2. Celui-ci comporte un organe d'entrée de couple 2 comprenant une partie avant 3 s'étendant axialement et destinée à être couplée à un dispositif d'amortissement, lui-même couplé à un vilebrequin d'un moteur à combustion interne d'un véhicule automobile, et une partie arrière 4 s'étendant radialement. La partie avant 3 comporte, d'avant en arrière, une première partie 5 cylindrique et une deuxième partie 6 cylindrique et de plus grand diamètre que la première partie 5. La partie arrière radiale 4 comporte un rebord cylindrique 7 s'étendant vers l'avant et présentant un diamètre plus grand que le diamètre de la deuxième partie cylindrique 6.

La première partie 5 sert au montage d'un roulement. La deuxième partie 6 est destinée à être couplée au dispositif d'amortissement, par exemple par l'intermédiaire de cannelures complémentaires. Le rebord cylindrique 7 est destiné à supporter un joint afin d'éviter que du fluide, tel que de l'huile, ne s'échappe du côté du moteur du véhicule.

La périphérie radialement externe de la partie arrière 4 de l'organe d'entrée de couple 2 est couplée en rotation à un premier support externe 8. Plus particulièrement, le premier support externe 8 comporte une partie avant 9 globalement cylindrique et une partie arrière annulaire 10 s'étendant radialement vers l'intérieur depuis la partie avant 9.

La périphérie radialement externe de l'organe d'entrée de couple 2 est couplée en rotation à la partie avant 9 et est maintenue axialement en position à l'aide d'un anneau élastique ou circlips 11. L'organe d'entrée de couple 2 et le premier support externe 8 délimitent un volume interne 12.

Des premiers disques 13 sont en outre montés sur la partie avant 9 du premier support externe 8, les premiers disques 13 étant espacés les uns des autres, logés dans le volume interne 12 précité et aptes à coulisser le long de ladite partie avant 9.

La périphérie interne de la partie arrière 10 du premier support externe 8 est fixée, par exemple par soudage, à un moyeu d'alimentation en fluide 14, par exemple en huile. Un premier support de joint 15 est en outre fixé, par exemple par soudage par point ou par rivetage, sur la face avant de la partie arrière 10 du premier support externe 8. Le premier support de joint 15 comporte une partie cylindrique avant 16, destinée à supporter un joint à lèvre 17, et une partie annulaire radiale arrière 18, fixée sur le premier support externe 8.

Le dispositif d'embrayage 1 comporte en outre un second support externe 19 comportant, comme précédemment, une partie avant cylindrique 20 et une partie arrière annulaire 21 s'étendant radialement et dont la périphérie radialement interne est fixée, par exemple par soudage, au moyeu d'alimentation 14. Plus particulièrement la partie arrière 21 comporte une zone radialement interne 21a et une zone radialement externe 21 b s'étendant radialement et décalées axialement l'une de l'autre. La zone radialement interne 21a est décalée vers l'avant par rapport à la zone radialement externe 21 b et est reliée à cette dernière par un épaulement cylindrique 21 c.

La partie arrière 21 du second support externe 19 est monté en avant de la partie arrière 10 du premier support externe 8, le second support externe 19 étant logé à l'intérieur du volume interne 12. Des seconds disques 22 sont en outre montés sur la partie avant 20 du second support externe 19, les seconds disques 22 étant espacés les uns des autres et sont aptes à coulisser le long de ladite partie avant 20.

Un second support de joint 23 est en outre fixé, par exemple par soudage par point ou par rivetage, sur la face avant de la zone 21 a de la partie arrière 21. Le second support de joint 23 comporte une partie cylindrique avant 24, destinée à supporter un joint à lèvre 25, et une partie annulaire radiale arrière 26, fixée sur le second support externe 19.

Le dispositif d'embrayage 1 comporte de plus un premier support interne 27 comprenant une partie avant 28 annulaire s'étendant radialement et une partie arrière cylindrique 29 s'étendant depuis la périphérie radialement externe de la partie avant 28. Un premier moyeu cylindrique 30 est situé en périphérie radialement interne de la partie avant 28. Le premier moyeu cylindrique 30 comporte des cannelures internes coopérant avec des cannelures externes d'un premier arbre de sortie de couple 31 ou premier arbre d'entrée d'une boîte de vitesses. Cet arbre 31 est par exemple associé aux rapports de vitesses impairs de la boîte de vitesses.

Des premiers contre-disques 32 sont couplés en rotation à la partie arrière 29 du premier support interne 27 et sont intercalés à chaque fois entre deux premiers disques 13, les premiers contre-disques 32 étant aptes à coulisser le long de ladite partie arrière 29. Chaque contre-disque 32 porte des garnitures de friction 33, comme cela est bien connu en soi.

Les premiers disques 13 et les premiers contre-disques 32 appartiennent à un premier mécanisme d'embrayage humide.

Le dispositif comporte en outre un second support interne 33 comprenant une partie avant annulaire 34 s'étendant radialement et une partie arrière cylindrique 35 s'étendant depuis la périphérie radialement externe de la partie avant 34. Un second moyeu cylindrique 36 est situé en périphérie radialement interne de la partie avant 34. Le second moyeu cylindrique 36 comporte des cannelures internes coopérant avec des cannelures externes d'un second arbre de sortie de couple 37 ou second arbre d'entrée d'une boîte de vitesses. Cet arbre 37 est par exemple associé aux rapports de vitesses pairs de la boîte de vitesses.

Les arbres de sortie de couple 31, 37 et le moyeu d'alimentation 14 sont coaxiaux, le second arbre de sortie de couple 37 étant monté à l'intérieur du moyeu d'alimentation 14, le premier arbre de sortie de couple 31 étant monté à l'intérieur du second arbre de sortie de couple 37.

Des seconds contre-disques 38 sont couplés en rotation à la partie arrière 35 du second support interne 33 et sont intercalés à chaque fois entre deux seconds disques 22, les seconds contre-disques 38 étant aptes à coulisser le long de ladite partie arrière 35. Chaque contre-disque 38 porte des garnitures de friction 39.

Les seconds disques 22 et les seconds contre-disques 39 sont situés radialement à l'intérieur de la partie cylindrique 20 du second support externe 19 et axialement à l'avant de la partie radial 21 dudit support externe 19. Les seconds disques 22 et les seconds contre-disques 39 appartiennent à un second mécanisme d'embrayage humide et sont situés radialement à l'intérieur des premiers disques 13 et des premiers contre-disques 32.

La partie avant 28 du premier support interne 27 est située axialement entre la partie radiale 4 de l'organe d'entrée de couple 2 et la partie avant 34 du second support interne 33. La partie avant 34 du second support interne 33 est située axialement entre la partie avant 28 du premier support interne 27 et l'extrémité avant du moyeu d'alimentation 14.

Un palier 40 est monté axialement entre l'organe d'entrée de couple 2 et le premier support interne 27. Un palier 41 est monté axialement entre le premier support interne 27 et le second support interne 33. Un palier 42 est monté axialement entre le second support interne 33 et le moyeu d'alimentation 14. Ces paliers 40, 41, 42 sont par exemple formés par des butées à aiguilles.

En outre, un palier 43 est monté radialement entre l'extrémité avant du premier arbre de sortie de couple 31 et la partie avant 3 de l'organe d'entrée de couple 2. Des paliers 44 sont en outre montés radialement entre le moyeu d'alimentation 14 et le second arbre 37. Ces paliers 43, 44 sont par exemple formés par des roulements à rouleaux.

Le dispositif d'embrayage 1 comporte également un premier piston 45, associé au premier mécanisme d'embrayage. Le premier piston 45 est monté axialement entre le premier support externe 8 et le second support externe 19. Le premier piston 45 comporte globalement deux zones 45a, 45b s'étendant radialement et décalée axialement l'une de l'autre, délimitant entre elles un épaulement cylindrique 45c. La périphérie radialement interne du premier piston 45 est équipée d'un joint à lèvre 46 en appui sur la surface externe du moyeu d'alimentation 14. Par ailleurs, le joint 17 est en appui sur la surface radialement interne de l'épaulement 45c du premier piston 45. Une première chambre de pression étanche 47 est ainsi délimitée par la zone 45b, l'épaulement 45c, le support de joint 15, la périphérie radialement interne du premier support externe 8 et le moyeu d'alimentation 14.

La périphérie radialement externe 45d du premier piston 45 est apte à venir en appui contre l'un des premiers disques 13. Le premier piston 45 est déplaçable axialement entre une position d'embrayage dans laquelle le premier piston 45 tend à plaquer les premier disques 13 sur les premier contre-disques 32 associés du premier mécanisme d'embrayage, et une position de débrayage dans laquelle le premier piston 45 tend à libérer les premier disques 13 et les premier contre-disques 32 du premier mécanisme d'embrayage.

Une première rondelle 48 est montée en avant du premier piston 45, ladite première rondelle 48 étant fixée sur la face arrière de la partie arrière 21 du second support externe 19, plus particulièrement dans la zone 21a, ladite première rondelle 48 comportant une partie annulaire radiale avant 49, dont la périphérie radialement externe est prolongée axialement vers l'arrière par une partie arrière cylindrique 50, située radialement à l'intérieur de l'épaulement 21 c.

La partie radiale avant 49 comporte des bossages 49a formés par emboutissage et venant de matière avec le reste de la première rondelle 48. Les bossages prennent appui sur la face arrière de la partie 21 a du second support externe 19 de manière à écarter la partie radiale 49 du support externe et former ainsi un canal de fuite 70. Plus particulièrement, le canal de fuite 70 comporte une partie annulaire radiale s'étendant entre les parties 21 a et 49, et une partie cylindrique s'étendant entre les parties 21 c et 50.

Selon une forme de réalisation non représenté, la partie 50 de la première rondelle 48 peut également comporter des bossages destinés à prendre appui sur la face radialement interne de la partie 21c du second support externe 19, de manière à garantir que la partie 50 soit écartée de la partie 21 c. Un tel écartement peut toutefois être garanti uniquement par un bon dimensionnement et un bon centrage de la première rondelle 48 et du second support externe 19.

Le canal de fuite 70 débouche dans la chambre de contre-pression 52 à son extrémité radialement interne et dans une partie 12a du volume interne, à son extrémité radialement externe. La partie 12a est délimitée entre la partie radiale 21 du second support externe 19 et le second piston 45. Cette partie 12a est fermée radialement à l'intérieur par le joint 46 et débouche radialement à l'extérieur dans une partie 12b du volume interne, dans laquelle sont logés les premiers disques 13 et les premiers contre-disques 32. La partie 12b est délimitée radialement entre la partie 9 du premier support externe 8 et la partie 20 du second support externe 19. Le volume interne 12 comporte en outre une troisième partie 12c située radialement à l'intérieur de la partie axiale 20 du second support externe et située axialement à l'avant de la partie radiale 21 du second support externe 19. Les parties 12a et 12c ne communiquent pas directement entre elles. Les parties 12b et 12c sont reliées fluidiquement par un passage situé axialement entre l'extrémité avant de la partie axiale 20 du second support externe 19 et la partie radiale 28 du premier support interne 27.

Un premier organe de rappel élastique, tel par exemple qu'une rondelle Belleville 51, est monté axialement entre la partie avant 49 de la première rondelle 48 et le premier piston 45. Le premier organe de rappel élastique 51 tend ainsi à rappeler le premier piston 45 vers sa position de débrayage. Le premier mécanisme d'embrayage est donc du type normalement ouvert.

Le premier organe élastique permet également de garder la rondelle 48 plaquée ce qui permet au canal 70 d'avoir des dimensions constantes.

Le joint à lèvre 46 porté par l'épaulement 45c du premier piston 45 vient en appui sur la partie cylindrique arrière 50 de la première rondelle 48. Une première chambre de contre-pression 52 est ainsi délimitée par la première rondelle 48, le premier piston 45, la périphérie radialement interne du second support externe 19 et le moyeu d'alimentation 14.

Par ailleurs, le dispositif d'embrayage comporte un second piston 53, associé au second mécanisme d'embrayage. Le second piston 53 est monté axialement entre le second support externe 19 et le second support interne 33. Comme précédemment, le second piston 53 porte un joint à lèvre 54 à sa périphérie interne, ledit joint 54 venant en appui sur le moyeu d'alimentation 14, et un joint à lèvre 55 au niveau d'un épaulement 53c, ledit joint 55 venant en appui sur une partie cylindrique d'une seconde rondelle 56. La seconde rondelle 56 est montée autour du moyeu d'alimentation 14 et est placée au contact de celui-ci. Un second organe de rappel élastique, tel par exemple qu'une rondelle Belleville 57, est monté entre la seconde rondelle 56 et le second piston 53.

Une seconde chambre de pression étanche 58 est délimitée par le second piston 53, le second porte-joint 23, la périphérie interne du second support externe 19 et le moyeu d'alimentation 14. Une seconde chambre de contre-pression 59 est délimitée par la seconde rondelle 56, le second piston 53 et le moyeu d'alimentation 14.

La périphérie radialement externe 53d du second piston 53 est apte à venir en appui contre l'un des seconds disques 22. Le second piston 53 est déplaçable axialement entre une position d'embrayage dans laquelle le second piston 53 tend à plaquer les seconds disques 22 sur les seconds contre-disques associés 38 du second mécanisme d'embrayage, et une position de débrayage dans laquelle le second piston 53 tend à libérer les seconds disques 22 et les seconds contre-disques 38 du second mécanisme d'embrayage.

Le moyeu d'alimentation 14 comporte trois canalisations 61 définissant trois circuits de fluide, à savoir un circuit de refroidissement, un circuit dit basse pression et un circuit dit haute pression. Les deux circuits de basse et haute pression sont alimentés par des pompes correspondantes. L'une au moins desdits pompes à un organe d'entraînement 62 qui est fixé au moyeu 14, par exemple par soudage, directement en arrière du premier support externe 8.

Le circuit haute-pression débouche dans les première et seconde chambres de pression 47, 58 par des orifices référencés respectivement 63 et 64, tandis que le circuit basse-pression débouche dans les première et seconde chambres de contre-pression 52, 59 et dans le volume interne 12 logeant notamment les premier et second mécanismes d'embrayage, par des orifices référencés respectivement 65, 66 et 67.

En fonctionnement, du fluide sous haute-pression peut être amené soit vers la première chambre de pression 47 et/ou soit vers la seconde chambre de pression 58, de façon à déplacer respectivement le premier piston 45 ou le second piston 53 et actionner ainsi le premier mécanisme d'embrayage ou le second mécanisme d'embrayage.

Une partie du fluide contenu dans la première chambre de contre-pression 52 peut s'échapper par le canal de fuite 70 et déboucher dans la partie 12a de l'espace interne 12 avant de déboucher dans la partie 12b, du fait de l'effet centrifuge, et être dirigé vers les premiers disques 13 et les premiers contre-disques 32. Le premier mécanisme d'embrayage étant généralement associé aux rapports de vitesses impairs de la boîte de vitesses, celui-ci est soumis à des échauffements importants. Le débit de fluide issu du canal de fuite 70 et de la partie 12a permet ainsi d'améliorer le refroidissement des premiers disques 13 et des premiers contre-disques 32. On notera que, contrairement à l'art antérieur, ce débit de fluide est protégé de l'échauffement généré par les seconds disques 22 et par les seconds contre-disques 38, la partie 12c du volume interne 12 étant située radialement à l'extérieur de la partie 12b et étant séparée de cette dernière par la partie 20 du second support externe 19, d'une part, et la partie 12a étant séparée de la partie 12c par la partie radiale 21 du second support externe 19, d'autre part.

Lors de l'embrayage du premier mécanisme d'embrayage, le couple entrant par l'organe d'entrée de couple 2 est transmis au premier arbre de sortie de couple 31 par l'intermédiaire du premier support externe 8, du premier mécanisme d'embrayage 13, 32 et du premier support interne 27.

Lors de l'embrayage du second mécanisme d'embrayage, le couple entrant par l'organe d'entrée de couple 2 est transmis au second arbre de sortie de couple par l'intermédiaire du premier support externe 8, du moyeu d'alimentation 14, du second support externe 19, du second mécanisme d'embrayage 22, 38 et du second support interne 33.

On notera que les deux mécanismes d'embrayage peuvent être actionnés simultanément notamment lors d'un changement de rapport de vitesses. Lorsque lesdites chambres de pression 47, 58 ne sont pas soumises à un fluide à haute-pression, alors les organes de rappel 51, 57 tendent à rappeler les pistons 45, 53 vers leurs positions de débrayage.

## Revendications

1. Dispositif d'embrayage (1) pour un véhicule automobile, comprenant des moyens d'entrée de couple (2) destinés à être couplés à un vilebrequin, un premier arbre de sortie de couple (31), un second arbre de sortie de couple (37), un premier mécanisme d'embrayage humide apte à coupler ou découpler les moyens d'entrée de couple (2) et le premier arbre de sortie de couple (31), un second mécanisme d'embrayage humide apte à coupler ou découpler les moyens d'entrée de couple (2) et le second arbre de sortie de couple (37), les premier et second mécanismes d'embrayage étant logés dans un volume interne (12) du dispositif (1) et comportant respectivement des premiers et des seconds disques (13, 22) montés respectivement sur un premier et un second supports externes (8, 19) appartenant aux moyens d'entrée de couple, les premiers et seconds mécanismes d'embrayage comportant en outre respectivement des premiers et des seconds contre-disques (32, 38) montés respectivement sur un premier et un second supports internes (27, 33) couplés en rotation respectivement au premier et au second arbres de sortie de couple (31, 37), les premiers et seconds mécanismes d'embrayage comportant respectivement un premier piston et un second piston, chaque piston étant déplaçable entre une position d'embrayage dans laquelle ledit piston (45, 53) plaque les disques (13, 22) sur les contre-disques associés (32, 38) du mécanisme d'embrayage correspondant, et une position de débrayage dans laquelle ledit piston (45, 53) libère les disques (13, 22) et les contre-disques (32, 38) du mécanisme d'embrayage correspondant, le premier piston (45) étant associé à une première chambre de pression (47) et à une première chambre de contre-pression (52), situées de part et d'autre du premier piston (45), un canal de fuite (70) reliant la première chambre de contre-pression (52) ou la première chambre de pression (47), d'une part, et le volume interne (12) logeant les mécanismes d'embrayage, le canal de fuite (70) étant dépourvu d'orifice traversant le premier support externe (8) ou le second support externe (19),
**caractérisé en ce qu'**il comporte un premier organe d'appui (48) délimitant au moins partiellement la première chambre de contre-pression (52), un organe de rappel élastique (51) étant monté entre l'organe d'appui (48) et le premier piston (45), ledit organe de rappel élastique (51) étant conçu pour rappeler le premier piston (45) vers sa position débrayée, le canal de fuite (70) s'étendant, au moins partiellement, entre l'organe d'appui (48) et le second support externe (19), la totalité du canal de fuite (70) étant située d'un même côté du second support externe (19).

2. Dispositif (1) selon la revendication 1, **caractérisé en ce que** le premier organe d'appui (48) comporte des moyens d'entretoisement (49a) permettant d'écarter le premier organe d'appui (48) du second support externe (19).

3. Dispositif (1) selon la revendication 2, **caractérisé en ce que** les moyens d'entretoisement comprennent des éléments en saillie, tels par exemple que des pattes ou des bossages (49a), venant de matière avec le premier organe d'appui (48).

4. Dispositif (1) selon l'une des revendications 1 à 3, **caractérisé en ce que** les premiers disques (13) et les premiers contre-disques (32) sont situés radialement à l'extérieur des seconds disques (22) et des seconds contre-disques (38), le second support externe (19) comportant une partie de séparation (21) s'étendant radialement au moins depuis l'extrémité radialement externe du canal de fuite (70) jusqu'à une zone située radialement à l'extérieur des seconds disques (22) et des seconds contre-disques (33), le canal de fuite (70) débouchant d'un côté de la partie de séparation (21) du second support externe (19) tandis que les seconds disques (22) et les seconds contre-disques (38) sont situés de l'autre côté de la partie de séparation (21) du second support externe (19).

5. Dispositif (1) selon l'une des revendications 1 à 4, **caractérisé en ce que** le second piston (53) est associé à une seconde chambre de pression (58) et à une seconde chambre de contre-pression (59), situées de part et d'autre du second piston (53), le dispositif (1) comportant en outre un moyeu d'alimentation (14) comportant un premier circuit de fluide apte à être relié fluidiquement à la première chambre de pression (47) ou à la seconde chambre de pression (58) et un second circuit de fluide apte à être reliée fluidiquement à la première chambre de contre-pression (52) ou à la seconde chambre de contre-pression (59).

6. Dispositif (1) selon la revendication 5, **caractérisé en ce que** le premier support externe (8) et le second support externe (19) sont couplés en rotation au moyeu d'alimentation (14).

7. Dispositif (1) selon l'une des revendications 1 à 6, **caractérisé en ce que** les moyens d'entrée de couple comportent un organe d'entrée de couple (2), couplé en rotation au premier support externe (8) et délimitant avec celui-ci le volume interne (12) dans lequel sont logés les premiers et seconds mécanismes d'embrayage.

8. Dispositif (1) selon l'une des revendications 5 à 7, **caractérisé en ce que** les deux arbres de sortie de couple (31, 37) sont coaxiaux, le premier arbre de sortie de couple (31) étant monté radialement à l'intérieur du second arbre de sortie de couple (37), le moyeu d'alimentation (14) entourant le second arbre de sortie de couple (37),

9. Véhicule automobile comportant au moins un dispositif (1) selon l'une des revendications 1 à 8.

## Patentansprüche

1. Kupplungsvorrichtung (1) für ein Kraftfahrzeug, umfassend Drehmomenteingangsmittel (2), die dazu bestimmt sind, mit einer Kurbelwelle gekoppelt zu werden, eine erste Drehmomentausgangswelle (31), eine zweite Drehmomentausgangswelle (37), einen ersten Nasskupplungsmechanismus, der geeignet ist, die Drehmomenteingangsmittel (2) und die erste Drehmomentausgangswelle (31) zu koppeln oder zu entkoppeln, einen zweiten Nasskupplungsmechanismus, der geeignet ist, die Drehmomenteingangsmittel (2) und die zweite Drehmomentausgangswelle (37) zu koppeln oder zu entkoppeln, wobei der erste und der zweite Kupplungsmechanismus in einem Innenvolumen (12) der Vorrichtung (1) aufgenommen sind und erste bzw. zweite Scheiben (13, 22) aufweisen, die auf einer ersten bzw. einer zweiten äußeren Halterung (8, 19) angebracht sind, die zu den Drehmomenteingangsmitteln gehört, wobei der erste und der zweite Kupplungsmechanismus außerdem erste bzw. zweite Gegenscheiben (32, 38) aufweisen, die auf einer ersten bzw. einer zweiten inneren Halterung (27, 33) angebracht sind, die mit der ersten bzw. mit der zweiten Drehmomentausgangswelle (31, 37) drehgekoppelt ist, wobei der erste und der zweite Kupplungsmechanismus einen ersten Kolben bzw. einen zweiten Kolben aufweisen, wobei jeder Kolben zwischen einer Einrückposition, in welcher der Kolben (45, 53) die Scheiben (13, 22) an die zugeordneten Gegenscheiben (32, 38) des entsprechenden Kupplungsmechanismus andrückt, und einer Ausrückposition, in welcher der Kolben (45, 53) die Scheiben (13, 22) und die Gegenscheiben (32, 38) des entsprechenden Kupplungsmechanismus freigibt, verschiebbar ist, wobei der erste Kolben (45) einer ersten Druckkammer (47) und einer ersten Gegendruckkammer (52) zugeordnet ist, die sich beiderseits des ersten Kolbens (45) befinden, wobei ein Auslaufkanal (70) die erste Gegendruckkammer (52) oder die erste Druckkammer (47) einerseits und das die Kupplungsmechanismen aufnehmende Innenvolumen (12) verbindet, wobei der Auslaufkanal (70) nicht mit einer Öffnung versehen ist, welche die erste äußere Halterung (8) oder die zweite äußere Halterung (19) durchquert, **dadurch gekennzeichnet, dass** sie ein erstes Stützorgan (48) aufweist, das die erste Gegendruckkammer (52) wenigstens teilweise begrenzt, wobei ein elastisches Rückholorgan (51) zwischen dem Stützorgan (48) und dem ersten Kolben (45) angebracht ist, wobei das elastische Rückholorgan (51) dafür ausgelegt ist, den ersten Kolben (45) zu seiner ausgerückten Position zurückzuholen, wobei sich der Auslaufkanal (70) wenigstens teilweise zwischen dem Stützorgan (48) und der zweiten äußeren Halterung (19) erstreckt, wobei sich der gesamte Auslaufkanal (70) auf ein und derselben Seite der zweiten äußeren Halterung (19) befindet.

2. Vorrichtung (1) nach Anspruch 1, **dadurch gekennzeichnet, dass** das erste Stützorgan (48) Abstandhaltemittel (49a) aufweist, die es ermöglichen, das erste Stützorgan (48) von der zweiten äußeren Halterung (19) auf Abstand zu halten.

3. Vorrichtung (1) nach Anspruch 2, **dadurch gekennzeichnet, dass** die Abstandhaltemittel vorspringende Elemente umfassen, wie zum Beispiel Laschen oder Höcker (49a), die mit dem ersten Stützorgan (48) stoffschlüssig verbunden sind.

4. Vorrichtung (1) nach einem der Ansprüche 1 bis 3, **dadurch gekennzeichnet, dass** sich die ersten Scheiben (13) und die ersten Gegenscheiben (32) radial außerhalb der zweiten Scheiben (22) und der zweiten Gegenscheiben (38) befinden, wobei die zweite äußere Halterung (19) einen Trennteil (21) aufweist, der sich radial wenigstens von dem radial äußeren Ende des Auslaufkanals (70) bis zu einem radial außerhalb der zweiten Scheiben (22) und der zweiten Gegenscheiben (33) befindlichen Bereich erstreckt, wobei der Auslaufkanal (70) auf einer Seite des Trennteils (21) der zweiten äußeren Halterung (19) mündet, während sich die zweiten Scheiben (22) und die zweiten Gegenscheiben (38) auf der anderen Seite des Trennteils (21) der zweiten äußeren Halterung (19) befinden.

5. Vorrichtung (1) nach einem der Ansprüche 1 bis 4, **dadurch gekennzeichnet, dass** der zweite Kolben (53) einer zweiten Druckkammer (58) und einer zweiten Gegendruckkammer (59) zugeordnet ist, die sich beiderseits des zweiten Kolbens (53) befinden, wobei die Vorrichtung (1) außerdem eine Zufuhrnabe (14) aufweist, die einen ersten Fluidkreis, der geeignet ist, mit der ersten Druckkammer (47) oder mit der zweiten Druckkammer (58) fluidisch verbunden zu werden, und einen zweiten Fluidkreis, der geeignet ist, mit der ersten Gegendruckkammer (52) oder mit der zweiten Gegendruckkammer (59) fluidisch verbunden zu werden, aufweist.

6. Vorrichtung (1) nach Anspruch 5, **dadurch gekennzeichnet, dass** die erste äußere Halterung (8) und die zweite äußere Halterung (19) mit der Zufuhrnabe (14) drehgekoppelt sind.

7. Vorrichtung (1) nach einem der Ansprüche 1 bis 6, **dadurch gekennzeichnet, dass** die Drehmomenteingangsmittel ein Drehmomenteingangsorgan (2) umfassen, das mit der ersten äußeren Halterung (8) drehgekoppelt ist und mit dieser das Innenvolumen (12) begrenzt, in welchem der erste und der zweite Kupplungsmechanismus aufgenommen sind.

8. Vorrichtung (1) nach einem der Ansprüche 5 bis 7, **dadurch gekennzeichnet, dass** die zwei Drehmomentausgangswellen (31, 37) koaxial sind, wobei die erste Drehmomentausgangswelle (31) radial innerhalb der zweiten Drehmomentausgangswelle (37) angebracht ist, wobei die Zufuhrnabe (14) die zweite Drehmomentausgangswelle (37) umgibt.

9. Kraftfahrzeug, welches wenigstens eine Vorrichtung (1) nach einem der Ansprüche 1 bis 8 umfasst.

## Claims

1. Clutch device (1) for a motor vehicle, comprising torque input means (2) intended to be coupled to a crankshaft, a first torque output shaft (31), a second torque output shaft (37), a first wet clutch mechanism able to couple or uncouple the torque input means (2) and the first torque output shaft (31), a second wet clutch mechanism able to couple or uncouple the torque input means (2) and the second torque output shaft (37), the first and second clutch mechanisms being housed in an internal volume (12) of the device (1) and respectively comprising first and second discs (13, 22) respectively mounted on a first and second external support (8, 19) belonging to the torque input means, the first and second clutch mechanisms additionally respectively comprising first and second counter-discs (32, 38) respectively mounted on a first and second internal support (27, 33) rotationally coupled respectively to the first and second torque output shaft (31, 37), the first and second clutch mechanisms respectively comprising a first piston and a second piston, each piston being moveable between a clutch engagement position in which said piston (45, 53) presses the discs (13, 22) firmly against the associated counter-discs (32, 38) of the corresponding clutch mechanism, and a clutch release position in which said piston (45, 53) releases the discs (13, 22) and the counter-discs (32, 38) of the corresponding clutch mechanism, the first piston (45) being associated with a first pressure chamber (47) and with a first counter-pressure chamber (52) which are situated on either side of the first piston (45), a leakage channel (70) connecting the first counter-pressure chamber (52) or the first pressure chamber (47), on the one hand, and the internal volume (12) housing the clutch mechanisms, the leakage channel (70) being devoid of an orifice passing through the first external support (8) or the second external support (19),
**characterized in that** it comprises a first bearing member (48) at least partially delimiting the first counter-pressure chamber (52), an elastic return member (51) being mounted between the bearing member (48) and the first piston (45), said elastic return member (51) being designed to return the first piston (45) to its clutch release position, the leakage channel (70) extending, at least partially, between the bearing member (48) and the second external support (19), the entirety of the leakage channel (70) being situated on one and the same side of the second external support (19).

2. Device (1) according to Claim 1, **characterized in that** the first bearing member (48) comprises spacing means (49a) allowing the first bearing member (48) to be spaced from the second external support (19).

3. Device (1) according to Claim 2, **characterized in that** the spacing means comprise projecting elements, such as, for example, lugs or bosses (49a), which are integrally formed with the first bearing member (48).

4. Device (1) according to one of Claims 1 to 3, **characterized in that** the first discs (13) and the first counter-discs (32) are situated radially outside the second discs (22) and the second counter-discs (38), the second external support (19) comprising a separation part (21) extending radially at least from the radially external end of the leakage channel (70) to a region situated radially outside the second discs (22) and the second counter-discs (33), the leakage channel (70) opening on one side of the separation part (21) of the second external support (19) while the second discs (22) and the second counter-discs (38) are situated on the other side of the separation part (21) of the second external support (19).

5. Device (1) according to one of Claims 1 to 4, **characterized in that** the second piston (53) is associated with a second pressure chamber (58) and a second counter-pressure chamber (59) which are situated on either side of the second piston (53), the device (1) additionally comprising a supply hub (14) comprising a first fluid circuit able to be fluidically connected to the first pressure chamber (47) or to the second pressure chamber (58) and a second fluid circuit able to be fluidically connected to the first counter-pressure chamber (52) or to the second counter-pressure chamber (59).

6. Device (1) according to Claim 5, **characterized in that** the first external support (8) and the second external support (19) are rotationally coupled to the supply hub (14).

7. Device (1) according to one of Claims 1 to 6, **characterized in that** the torque input means comprise a torque input member (2) rotationally coupled to the first external support (8) and delimiting therewith the internal volume (12) in which the first and second clutch mechanisms are housed.

8. Device (1) according to one of Claims 5 to 7, **characterized in that** the two torque output shafts (31, 37) are coaxial, the first torque output shaft (31) being mounted radially inside the second torque output shaft (37), the supply hub (14) surrounding the second torque output shaft (37).

9. Motor vehicle comprising at least one device (1) according to one of Claims 1 to 8.
